# EUROPEAN PATENT APPLICATION

(11) **EP 4 749 957 A1**
(43) Date of publication of application: **27.05.2026**
(21) Application number: 25218451.0
(22) Date of filing: 25.11.2025
(51) Int. Cl.: H04J 14/02

(54) **TECHNOLOGY-AWARE OPTICAL DEVICE FOR AN OPTICAL NETWORK**

(30) Priority: 25.11.2024 US 202418958984
(71) Applicant: Nokia Solutions and Networks Oy, 02610 Espoo (FI)
(72) Inventor: VIJAYAN, Kovendhan, Edison, 08817 (US); BORKOWSKI, Robert, Murray Hill, 07974-0636 (US); HUYNH, Tam, Morganville, 07751 (US)
(74) Representative: Ipsilon Belgium

(57) **Abstract**

Various example embodiments for supporting optical communications in an optical communication system are presented herein. Various example embodiments for supporting optical communications in an optical communication system may be configured to use a technology-aware optical device (130, 200, 330, 400) to support co-existence of multiple optical technology types in a point-to-multipoint optical network (100).

## Description

### TECHNICAL FIELD

Various example embodiments relate generally to communication systems and, more particularly but not exclusively, to supporting communications in optical communication systems.

### BACKGROUND

Various communications technologies may be used to support communications in various types of communication systems.

### SUMMARY

The scope of protection sought for various example embodiments is set out by the independent claims. The embodiments and features described in this specification that do not fall within the scope of the independent claims, if any, are to be interpreted as examples useful for understanding various example embodiments.

In at least some example embodiments, an apparatus configured to support a plurality of optical branches of an optical network is provided. The apparatus may include an optical splitter/combiner and an optical technology multiplexer/demultiplexer. The optical splitter/combiner may include a plurality of sections associated with a respective plurality of sets of wavelength bands, where each of the sections of the optical splitter/combiner is configured to convert between a respective optical signal of the respective set of wavelength bands and a plurality of optical signals of the respective set of wavelength bands associated with the respective optical branches. The optical technology multiplexer/demultiplexer may include a plurality of sections associated with the respective plurality of optical branches, where each of the sections of the optical technology multiplexer/demultiplexer is configured to convert between respective optical signals of the respective sets of wavelength bands associated with the respective sections of the optical splitter/combiner and a respective combined optical signal for the respective optical branch.

In at least some example embodiments, the plurality of sets of wavelength bands may be associated with a respective plurality of optical technology types. In at least some example embodiments, the respective plurality of optical technology types may include a respective plurality of passive optical network (PON) generations. In at least some example embodiments, the respective plurality of PON generations include at least two of an XGS-PON, a 25GS-PON, a 50G-PON, or a Very High Speed PON (VHSP).

In at least some example embodiments, in a direction toward the optical branches, each of the sections of the optical splitter/combiner is configured to split the respective optical signal of the respective set of wavelength bands to provide the plurality of optical signals of the respective set of wavelength bands associated with the respective optical branches.

In at least some example embodiments, in a direction toward the optical branches, each of the sections of the optical technology multiplexer/demultiplexer is configured to multiplex the respective optical signals of the respective sets of wavelength bands associated with the respective sections of the optical splitter/combiner to provide the respective combined optical signal for the respective optical branch.

In at least some example embodiments, in a direction from the optical branches, each of the sections of the optical technology multiplexer/demultiplexer is configured to demultiplex the respective combined optical signal for the respective optical branch to provide the respective optical signals of the respective sets of wavelength bands associated with the respective sections of the optical splitter/combiner.

In at least some example embodiments, in a direction from the optical branches, each of the sections of the optical splitter/combiner is configured to combine the plurality of optical signals of the respective set of wavelength bands associated with the respective optical branches to provide the respective optical signal of the respective set of wavelength bands.

In at least some example embodiments, for at least one of the sections of the optical splitter/combiner, the respective section of the optical splitter/combiner comprises at least one stage of optical splitter/combiner devices configured to convert between the respective optical signal of the respective set of wavelength bands and the plurality of optical signals of the respective set of wavelength bands associated with the respective optical branches. In at least some example embodiments, each of the at least one stage of optical splitter/combiner devices includes at least one Mach-Zehnder interferometer.

In at least some example embodiments, the plurality of optical branches incudes 2^{N} optical branches, wherein, for each of the sections of the optical splitter/combiner, the respective section of the optical splitter/combiner includes N stages of optical splitter/combiner devices.

In at least some example embodiments, for at least one of the optical branches, the optical technology multiplexer/demultiplexer comprises at least one optical multiplexer/demultiplexer device configured to convert between respective optical signals of the respective sets of wavelength bands associated with the respective sections of the optical splitter/combiner and a respective combined optical signal for the respective optical branch.

In at least some example embodiments, the plurality of sets of wavelength bands includes X sets of wavelength bands, wherein, for each of the optical branches, the respective section for the respective optical branch comprises X-1 stages of optical technology multiplexer/demultiplexer devices.

In at least some example embodiments, the apparatus further includes an optical technology demultiplexer/multiplexer configured to convert between a combined optical signal comprising the plurality of sets of wavelength bands and the respective optical signals of the respective sets of wavelength bands.

In at least some example embodiments, in a direction toward the optical branches, the optical technology demultiplexer/multiplexer is configured to demultiplex the combined optical signal comprising the plurality of sets of wavelength bands and direct the respective optical signals of the respective sets of wavelength bands toward the plurality of sections of the optical splitter/combiner.

In at least some example embodiments, in a direction from the optical branches, the optical technology demultiplexer/multiplexer is configured to receive the respective optical signals of the respective sets of wavelength bands from the plurality of sections of the optical splitter/combiner and multiplex the respective optical signals of the respective sets of wavelength bands to form the combined optical signal.

In at least some example embodiments, at least one of: (1) for at least one of the optical branches, the respective combined optical signal for the respective optical branch includes optical communication signals from only one of the sets of wavelength bands, (2) for at least one of the optical branches, the respective combined optical signal for the respective optical branch includes optical communication signals from a subset of the sets of wavelength bands, (3) for at least one of the optical branches, the respective combined optical signal for the respective optical branch includes optical communication signals from each of the sets of wavelength bands, or (4) for at least one of the optical branches, the respective combined optical signal for the respective optical branch does not includes optical communication signals from any of the sets of wavelength bands.

In at least some example embodiments, the apparatus is configured to improve at least one of a downstream communication metric, an upstream communication metric, a bit error ratio metric, a transmit power metric, a receive power metric, an optical power equalization metric, an optical power budget equalization metric, or a metric related to balancing capacity via probabilistic shaping versus received power.

In at least some example embodiments, the apparatus is configured to be disposed within an optical distribution network (ODN) of a passive optical network (PON). In at least some example embodiments, at least a portion of the optical branches are associated with respective optical network units (ONUs).

In at least some example embodiments, a corresponding method is provided. The method may include operating an optical splitter/combiner comprising a plurality of sections associated with a respective plurality of sets of wavelength bands, wherein each of the sections of the optical splitter/combiner is configured to convert between a respective optical signal of the respective set of wavelength bands and a plurality of optical signals of the respective set of wavelength bands associated with the respective optical branches, and operating an optical technology multiplexer/demultiplexer comprising a plurality of sections associated with the respective plurality of optical branches, wherein each of the sections of the optical technology multiplexer/demultiplexer is configured to convert between respective optical signals of the respective sets of wavelength bands associated with the respective sections of the optical splitter/combiner and a respective combined optical signal for the respective optical branch. It will be appreciated that various example embodiments presented hereinabove within the context of the apparatus also may be adapted for use within the context of this method.

In at least some example embodiments, an apparatus configured to support a plurality of optical branches of an optical network is provided. The apparatus may include means having a plurality of sections associated with a respective plurality of sets of wavelength bands, where each of the sections of the optical splitter/combiner is configured to convert between a respective optical signal of the respective set of wavelength bands and a plurality of optical signals of the respective set of wavelength bands associated with the respective optical branches. The apparatus may include means having a plurality of sections associated with the respective plurality of optical branches, where each of the sections of the optical technology multiplexer/demultiplexer is configured to convert between respective optical signals of the respective sets of wavelength bands associated with the respective sections of the optical splitter/combiner and a respective combined optical signal for the respective optical branch. It will be appreciated that various example embodiments presented hereinabove within the context of the apparatus also may be adapted for use within the context of this apparatus.

### BRIEF DESCRIPTION OF THE DRAWINGS

The teachings herein can be readily understood by considering the following detailed description in conjunction with the accompanying drawings, in which:
FIG. 1 depicts an example embodiment of a passive optical network (PON) configured to support use of a technology-aware optical device configured to support co-existence of multiple optical technology types;
FIG. 2 depicts an example embodiment of a technology-aware optical device, including a reconfigurable optical technology demultiplexer/multiplexer, a reconfigurable optical splitter/combiner, and a reconfigurable optical technology multiplexer/demultiplexer, suitable for use as the technology-aware optical device of FIG. 1;
FIG. 3 depicts an example embodiment of a passive optical network (PON) configured to support use of a technology-aware optical device configured to support co-existence of multiple optical technology types;
FIG. 4 depicts an example embodiment of a technology-aware optical device, including a reconfigurable optical splitter/combiner and a reconfigurable optical technology multiplexer/demultiplexer, suitable for use as the technology-aware optical device of FIG. 3;
FIG. 5 depicts an example embodiment of a method for use by a technology-aware optical device configured to support co-existence of multiple optical technology types;
FIG. 6 depicts an example embodiment of use of a technology-aware optical device configured to support co-existence of multiple optical technology types to support optical technology reconfigurability capabilities;
FIG. 7 depicts an example embodiment of use of a technology-aware optical device configured to support co-existence of multiple optical technology types to support power balancing capabilities;
FIG. 8 depicts an example embodiment of use of a technology-aware optical device configured to support co-existence of multiple optical technology types to support optical technology type evolution capabilities; and
FIG. 9 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a technology-aware optical device are presented. The technology-aware optical device may be configured to support co-existence of multiple optical technology types in an optical network having a plurality of optical branches. The technology-aware optical device may be configured to support flexible delivery of optical signals of the optical technology types where a given optical technology type corresponds to a set of one or more wavelength bands (e.g., a contiguous range of wavelengths, a number of disjoint contiguous ranges of wavelengths, or the like) associated with a specific optical technology (e.g., an optical system using the wavelength band(s)). The technology-aware optical device may be configured to support flexible delivery of optical signals of the optical technology types for the optical branches in either or both directions of transmission (e.g., in the downstream direction for delivery of optical signals sent toward endpoints of the optical branches, in the upstream direction for delivery of optical signals sent from endpoints of the optical branches, or a combination thereof). The technology-aware optical device may be configured to provide flexible delivery of optical signals of the optical technology types for the optical branches, thereby obviating the need for the optical signals of each of the optical technology types to be used for each of the optical branches while still enabling optical signals of any of the optical technology types to be used for each of the optical branches (in the downstream direction toward the optical branches) and obviating the need for the optical signals of each of the optical technology types to be provided to each of the upstream optical devices supporting optical communications for the respective optical technology types (in the upstream direction from the optical branches). The technology-aware optical device may be configured to provide flexible delivery of optical signals of the optical technology types for the optical branches based on inclusion of a reconfigurable optical splitter/combiner (operating as a splitter in the downstream direction and operating as a combiner in the upstream direction, and configured to convert between optical signals of each of the optical technology types and respective sets of optical signals of the optical technology types for the optical branches) and a reconfigurable optical technology multiplexer/demultiplexer (operating as a multiplexer in the downstream direction and a demultiplexer in the upstream direction, and configured to, for each of the optical branches, convert between the respective optical signals of the respective optical technology types provided for the respective optical branch and a combined optical signal for the respective optical branch). The technology-aware optical device is configured to operate as a low-loss optical device that reduces the splitting loss on a per-technology basis, which is possible when multiple optical technology types coexist in a point-to-multipoint optical network. The technology-aware optical device may be configured to provide flexible delivery of optical signals of the optical technology types for the optical branches while supporting power balancing within optical technology types, supporting evolution of the set of optical technology types supported by the point-to-multipoint optical network, or the like, as well as various combinations thereof. The technology-aware optical device may be configured to support various optical technology types, including passive optical networking (PON) optical technology types such as XGS-PON, 25GS-PON, 50G-PON, Very High Speed PON (VHSP), or the like, as well as various combinations thereof. It will be appreciated that these and various other example embodiments of a technology-aware optical device configured to support co-existence of multiple optical technology types, and advantages or potential advantages of a technology-aware optical device configured to support co-existence of multiple optical technology types, may be further understood by way of reference to the various figures, which are discussed further below.

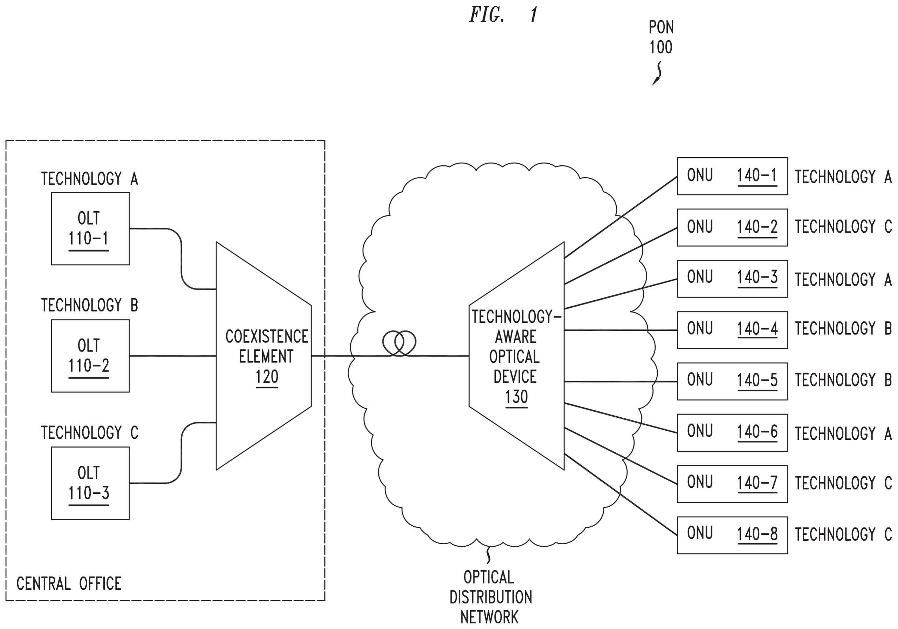

FIG. 1 depicts an example embodiment of a passive optical network (PON) configured to support communications between a set of optical line terminals (OLTs) and a set of optical network units (ONUs) using a technology-aware optical device configured to support multiple optical technology types.

The PON 100 is configured to operate as an optical network of an optical communication service provider to provide network access to a set of users, based on optical communications, in various contexts and based on various technologies. The PON 100 includes a set of optical line terminals (OLTs) 110-1 to 110-3 (collectively, OLTs 110), a coexistence element 120, a technology-aware optical device 130, and a set of optical network units (ONUs) 140-1 - 140-8 (collectively, ONUs 140). The PON 100 of the optical communication service provider may be configured such that the three OLTs 110 and the coexistence element 120 may be located at a central office of the optical communication service provider, the technology-aware optical device 130 may be disposed within an optical distribution network (ODN) of the optical communication service provider, and the ONUs 140 may be associated with user locations of users of the optical communication service provider (which, for purposes of clarity, have not been indicated in FIG. 1). It will be appreciated that the PON 100 may include various other elements for supporting optical communications for the set of users.

The PON 100 supports concurrent use of three optical technology types in the form of three PON generations which are referred to as Technology A, Technology B, and Technology C. For example, the three PON generations of the three technology types may include any three of XGS-PON, 25GS-PON, 50G-PON, VHSP, or the like. The three OLTs 110 are configured to support optical communications based on the three optical technology types (illustratively, OLT 110-1 is configured to support optical communications based on Technology A, OLT 110-2 is configured to support optical communications based on Technology B, and OLT 110-3 is configured to support optical communications based on Technology C). The coexistence element 120 is configured to support coexistence of the three optical technology types within the ODN, including support for combining optical signals of the three optical technology types output by the OLTs 110 for transmission over the ODN toward the ONUs 140 in the downstream direction and support for splitting of optical signals of the three optical technology types provided by the ONUs 140 over the ODN toward the OLTs 110 in the upstream direction. The technology-aware optical device 130, as discussed further below, is configured to perform various optical multiplexing-demultiplexing functions, including various combinations of optical multiplexing functions and optical demultiplexing functions (which may be in the form of optical splitting functions and/or optical combining functions) for providing intelligent control over communication of the optical signals of the three optical technology types between the OLTs 110 and the ONUs 140. The ONUs 140 each are utilizing only one of the available optical technology types (illustratively, ONUs 140-1, 140-3, and 140-6 are utilizing Technology A, ONUs 140-4 and 140-5 are utilizing Technology B, and ONUs 140-2, 140-7, and 140-8 are utilizing Technology C).

The technology-aware optical device 130, as indicated above and discussed further below, may be configured to perform various optical multiplexing-demultiplexing functions, including various combinations of optical multiplexing functions and optical demultiplexing functions (which may be in the form of optical splitting functions and/or optical combining functions) for providing intelligent control over communication of the optical signals of the three optical technology types between the OLTs 110 and the ONUs 140. The optical technology types, while primarily presented herein as corresponding to particular PON generations, also may be considered to correspond to particular sets of wavelength bands associated with specific optical technologies (systems using these sets of wavelength bands), respectively. The set of wavelength bands for an optical technology type may include a contiguous range of wavelengths or a number of disjoint contiguous ranges of wavelengths. Here, an element that supports redirecting of wavelength bands may be referred to herein as a wavelength band multiplexer/demultiplexer, which is configured to support bidirectional redirection of sets of optical bands with only a small excess loss. Namely, a multiplexer may be a device that is capable of redirecting sets of wavelength bands from multiple inputs (one set per input) into a single output where each input corresponds to one set of wavelengths associated with a technology type and a demultiplexer may be a device that is capable of redirecting sets of wavelength bands from one input into separate outputs where each output corresponds to one set of wavelengths associated with a technology type. It will be appreciated that the multiplexer and demultiplexer may refer to the same device when operated in a bidirectional manner and, thus, that such a device may be referred to herein as a multiplexer/demultiplexer (mux-demux) to indicate its bidirectional nature.

The technology-aware optical device 130 may be configured such that, in the downstream direction from the OLTs 110 toward the ONUs 140, any of the optical signals of any of the optical technology types may be delivered to any of the ONUs 140. The technology-aware optical device 130 may deliver zero or more optical signals of zero or more of the optical technology types to any given ONU 140. For example, although omitted from FIG. 1 for purposes of clarity, where an output of the technology-aware optical device 130 does not have any device (e.g., ONU, splitter, or the like) connected thereto, the technology-aware optical device 130 can prevent any optical power of any of the optical technology types from being provided to that output of the technology-aware optical device 130, thereby conserving the optical power of the optical signals of the optical technology types for delivery to outputs of the technology-aware optical device 130 connected to ones of the ONUs 140 which could use the optical signals of the optical technology types, respectively. For example, as illustrated in FIG. 1 and discussed further below, where an output of the technology-aware optical device 130 is connected to an ONU 140 supporting a single optical technology type, the technology-aware optical device 130 can ensure that only the optical signal of the supported optical technology type is provided to the ONU 140. For example, although omitted from FIG. 1 for purposes of clarity, where an output of the technology-aware optical device130 is connected to an endpoint with at least one ONU capable of supporting more than one technology type (e.g., an ONU capable of supporting multiple technology types, multiple ONUs supporting respective technology types, or the like), the technology-aware optical device 130 can ensure that the optical signals of the supported optical technology types are provided to the ONU 140 (e.g., a subset of the multiple optical technology types or all of the multiple optical technology types).

The technology-aware optical device 130 may be configured such that, in the downstream direction from the OLTs 110 toward the ONUs 140, for each of the optical technology types, the optical signal of the respective optical technology type is only delivered to ones of the ONUs 140 that need that respective optical technology type, thereby reducing the insertion loss on each of the optical branches of the ONUs 140 since the optical power of each optical technology type only needs to be split across the ones of the ONUs 140 that need that respective optical technology type rather than being split evenly across all of the optical branches of the technology-aware optical device 130 supporting optical communications of the ONUs 140. In other words, rather than delivering Technology A optical signals, Technology B optical signals, and Technology C optical signals to each of the ONUs 140, the technology-aware optical device 130 is configured to ensure that the Technology A optical signals from the OLT 110-1 are only delivered to the Technology A ONUs 140-1, 140-3, and 140-6 (i.e., the optical power of the Technology A optical signals is only split between three of the ONUs 140 rather than all eight ONUs 140), the Technology B optical signals from the OLT 110-2 are only delivered to the Technology BONUs 140-4 and 140-5 (i.e., the optical power of the Technology B optical signals is only split between two of the ONUs 140 rather than all eight ONUs 140), and the Technology C optical signals from the OLT 110-3 are only delivered to the Technology C ONUs 140-2, 140-7, and 140-8 (i.e., the optical power of the Technology C optical signals is only split between three of the ONUs 140 rather than all eight ONUs 140). In this manner, the technology-aware optical device 130 is configured to provide significant improvements over use of a passive splitter that would otherwise distribute each of the optical signals of each of the optical technology types to each of the ONUs 140.

The technology-aware optical device 130 may be configured such that, in the upstream direction from the ONUs 140 toward the OLTs 110, for each of the optical technology types, the optical signals of the respective optical technology type are delivered from any of the ONUs 140 communicating using that optical technology type to the OLT 110 that supports communication using that optical technology type, respectively. In other words, rather than delivering Technology A optical signals, Technology B optical signals, and Technology C optical signals to each of the OLTs 110, the technology-aware optical device 130 is configured to ensure that the Technology A optical signals from the Technology A ONUs 140-1, 140-3, and 140-6 are only delivered to the OLT 110-1, the Technology B optical signals from the Technology b ONUs 140-4 and 140-5 are only delivered to the OLT 110-2, and the Technology C optical signals from the Technology C ONUs 140-2, 140-7, and 140-8 are only delivered to the OLT 110-3. In this manner, in the upstream direction, the technology-aware optical device 130 is configured to provide significant improvements over use of a passive splitter that would otherwise distribute each of the optical signals of each of the optical technology types to each of the OLTs 110 even though each of the OLTs 110 supports only one of the technology types, respectively.

The technology-aware optical device 130 may be configured to control communication of the optical signals of the optical technology types between the OLTs 110 and the ONUs 140 based on use of optical multiplexers-demultiplexers supporting optical multiplexing-demultiplexing capabilities, including optical demultiplexing (or splitting) capabilities and optical multiplexing (or combining) capabilities. It will be appreciated that the optical multiplexing-demultiplexing capabilities performed by the optical multiplexers-demultiplexers may be based on the direction of transmission (e.g., an optical multiplexer-demultiplexer may perform optical demultiplexing for optical signals sent downstream from the OLTs 110 toward the ONUs 140 and may perform optical multiplexing for optical signals sent upstream from the ONUs 140 toward the OLTs 110 and, similarly, an optical multiplexer-demultiplexer may perform optical multiplexing for optical signals sent downstream from the OLTs 110 toward the ONUs 140 and may perform optical demultiplexing for optical signals sent upstream from the ONUs 140 toward the OLTs 110). It will be appreciated that various combinations of such optical multiplexers-demultiplexers may be arranged within the technology-aware optical device 130 such that the technology-aware optical device 130 may be configured to control communication of the optical signals of the optical technology types between the OLTs 110 and the ONUs 140, including downstream from the OLTs 110 to the ONUs 140 and upstream from the ONUs 140 to the OLTs 110, based on use of optical multiplexers-demultiplexers supporting optical multiplexing-demultiplexing capabilities.

The technology-aware optical device 130, as indicated above, may be configured to control communication of optical signals of the optical technology types downstream from the OLTs 110 to the ONUs 140 based on use of optical multiplexers-demultiplexers supporting optical multiplexing-demultiplexing capabilities. The technology-aware optical device 130 may include various optical demultiplexing or splitting capabilities configured to split the optical signals of each of the optical technology types into separate optical signals for each of the ONUs 140, thereby enabling the technology-aware optical device 130 to support delivery of the optical signals of each of the optical technology types to each of the ONUs 140 based on the capabilities and needs of the ONUs 140. The technology-aware optical device 130 may include various optical multiplexing or combining capabilities configured to combine the optical signals for the optical technology types for the ONUs 140 to form combined optical signals which may then be delivered from the technology-aware optical device 130 to the ONUs 140, respectively, thereby enabling the technology-aware optical device 130 to support delivery of any of the optical signals of any of the optical technology types to each of the ONUs 140 based on the capabilities and needs of the ONUs 140. It will be appreciated that the technology-aware optical device 130 may be configured to utilize various other optical demultiplexing/splitting and/or multiplexing/combining capabilities to support targeted delivery of optical signals of optical technology types only to the ONUs 140 utilizing those optical technology types.

The technology-aware optical device 130, as indicated above, may be configured to control communication of optical signals of the optical technology types upstream from the ONUs 140 to the OLTs 110 based on use of optical multiplexers-demultiplexers supporting optical multiplexing-demultiplexing capabilities. The technology-aware optical device 130 may include various optical splitting capabilities configured to split the optical signals of each of the optical technology types into separate optical signals for each of the OLTs 110, thereby enabling the technology-aware optical device 130 to support delivery of the optical signals of each of the optical technology types to the proper OLTs 110 based on the capabilities of the OLTs 110. The technology-aware optical device 130 may include various optical combining capabilities configured to combine the optical signals output for the optical technology types for the OLTs 110 to form combined optical output signals which may then be delivered to the OLTs 110, respectively, thereby enabling the technology-aware optical device 130 to support delivery of the optical signals of the optical technology types to the proper OLTs 110 based on the capabilities of the OLTs 110. It will be appreciated that the technology-aware optical device 130 may be configured to utilize various other optical splitting and/or combining capabilities to support targeted delivery of optical signals of optical technology types only to the OLTs 110 utilizing those optical technology types.

The technology-aware optical device 130, as indicated above, may be configured to control communication of the optical signals of the optical technology types between the OLTs 110 and the ONUs 140 based on use of optical multiplexers-demultiplexers supporting optical multiplexing-demultiplexing capabilities. The technology-aware optical device 130 may include optical multiplexing-demultiplexing capabilities, including optical splitting capabilities and optical combining capabilities. In this manner, the technology-aware optical device 130 is configured to control delivery of any optical signal of any optical technology type between any of the OLTs 110 and any of the ONUs 140 as needed, thereby enabling support for co-existence of multiple optical technology types, permitting evolution between optical technology types (both on the network side as the OLTs 110 evolve and on the user side as the ONUs 140 evolve), enabling support for intelligent power control for providing optimization of optical power between the OLTs 110 and the ONUs 140 based on capabilities and needs of the ONUs 140 (e.g., number of ONUs 140 utilizing each optical technology type, distance of ONUs 140 from the technology-aware optical device 130, or the like, as well as various combinations thereof), or the like, as well as various combinations thereof.

The technology-aware optical device 130 may be implemented in various ways. The technology-aware optical device 130 may be implemented based on various types of optical technologies, electronics technologies, mechanical technologies, or the like, as well as various combinations thereof. For example, the technology-aware optical device 130 may be implemented using various technologies, such as planar lightwave circuit (PLC) technology, silicon photonics, optical micro-electromechanical systems (MEMS) elements, thin-film filter technology, or the like, as well as various combinations thereof. For example, the technology-aware optical device 130 may be implemented using various technologies which may be latching or non-latching. It will be appreciated that PLC technology, given that it has relatively large wideband operation, simultaneous coverage for both O-band operation and C-band operation, and lack of polarization dependency, is particularly well-suited for implementing variable optical splitters and, therefore, potential implementations of the technology-aware optical device 130 using PLC technology to implement the reconfigurable optical splitter/combiner (including tunable Mach-Zehnder interferometers) and reconfigurable optical technology mux/demux of the technology-aware optical device 130 are presented herein. It will be appreciated that the technology-aware optical device 130 may be implemented in various other ways.

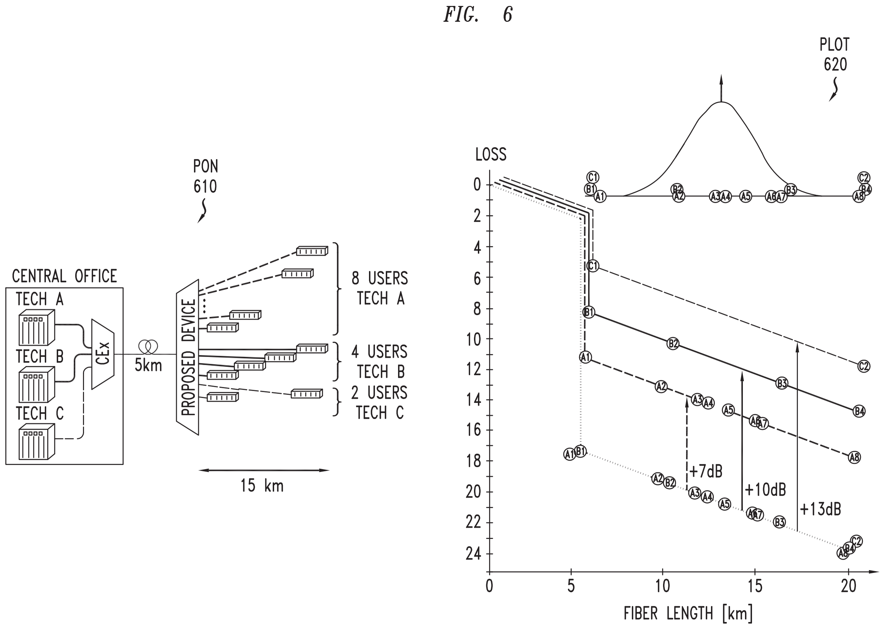

The technology-aware optical device 130 may be configured to be compatible with various International Telecommunication Union - Telecommunication Standardization Sector (ITU-T) optical technology co-existence scenarios. For example, the technology-aware optical device 130 may be configured to be compatible with the co-existence scenario depicted and described in Figure 6-3, Figure 6-3a, and Figure 6-4 of ITU-T G.9805 (e.g., the technology-aware optical device 130 may be used to replace the passive optical splitter/combiner depicted in Figure 6-3 or Figure 6-3a). For example, the technology-aware optical device 130 may be configured to be compatible with the co-existence scenario depicted and described in Figure 6-4 of ITU-T G.9805 (e.g., the technology-aware optical device 130 may be used to replace the passive optical splitter/combiner depicted in Figure 6-4). It will be appreciated that the technology-aware optical device 130 may be configured for use in various other optical technology co-existence scenarios. It will be appreciated that the technology-aware optical device 130 may be configured for use in various other optical technology co-existence scenarios.

The technology-aware optical device 130 may be configured to utilize various power and control signals for supporting operation of the technology-aware optical device 130 within the PON 100. It will be appreciated that the powering of the technology-aware optical device 130 and/or controlling of the operation of the technology-aware optical device 130 may be provided in various ways. In at least some example embodiments, for example, the power and control signals for the technology-aware optical device 130 can be sent from one or more of the OLTs 110 to the technology-aware optical device 130 through the feeder fiber, remotely powering and/or controlling the operation of the technology-aware optical device 130. In at least some example embodiments, for example, the technology-aware optical device 130 may be powered through any power source available locally in the location of the technology-aware optical device 130 and the control signals for the technology-aware optical device 130 can be sent from one or more of the OLTs 110 to the technology-aware optical device 130 through the feeder fiber. In at least some example embodiments, for example, the technology-aware optical device 130 may be powered remotely (e.g., based on power signals sent from one or more of the OLTs 110 to the technology-aware optical device 130 through the feeder fiber) or locally (e.g., through any power source available locally in the location of the technology-aware optical device 130) and the control signals for the technology-aware optical device 130 may be provided to the technology-aware optical device 130 by one or more management elements associated with the PON 100. It will be appreciated that the powering of the technology-aware optical device 130 and/or controlling of the operation of the technology-aware optical device 130 may be provided in various other ways for supporting operation of the technology-aware optical device 130 within the PON 100.

It will be appreciated that the PON 100, although primarily presented with respect to example embodiments having specific types, numbers, and arrangements of elements, may include various other types, numbers, and/or arrangements of elements. For example, although primarily presented with respect to example embodiments in which the technology-aware optical device 130 is a 1x8 optical device supporting 8 optical branches associated with 8 ONUs 140, the technology-aware optical device 130 may support fewer or more optical branches for fewer or more ONUs (e.g., a 1x4 optical device, a 1x16 optical device, a 1x32 optical device, or the like). For example, although primarily presented with respect to example embodiments in which the ODN of the optical service provider includes the technology-aware optical device 130 as well as optical fibers connecting the central office and endpoints with the ODN, the ODN may include various other elements (e.g., conventional splitters, conventional combiners, or the like) configured to supporting various functions (e.g., splitting, combining, amplifying, monitoring, controlling, or the like) for optical signals in the ODN. For example, although primarily presented with respect to example embodiments in which the PON 100 includes a single technology-aware optical device 130, the PON 100 may include additional technology-aware optical devices which may be arranged in one or more hierarchical levels (e.g., in parallel, cascaded, or using a combination thereof) to support various numbers of optical branches. It will be appreciated that the PON 100 may include various other types, numbers, and/or arrangements of elements.

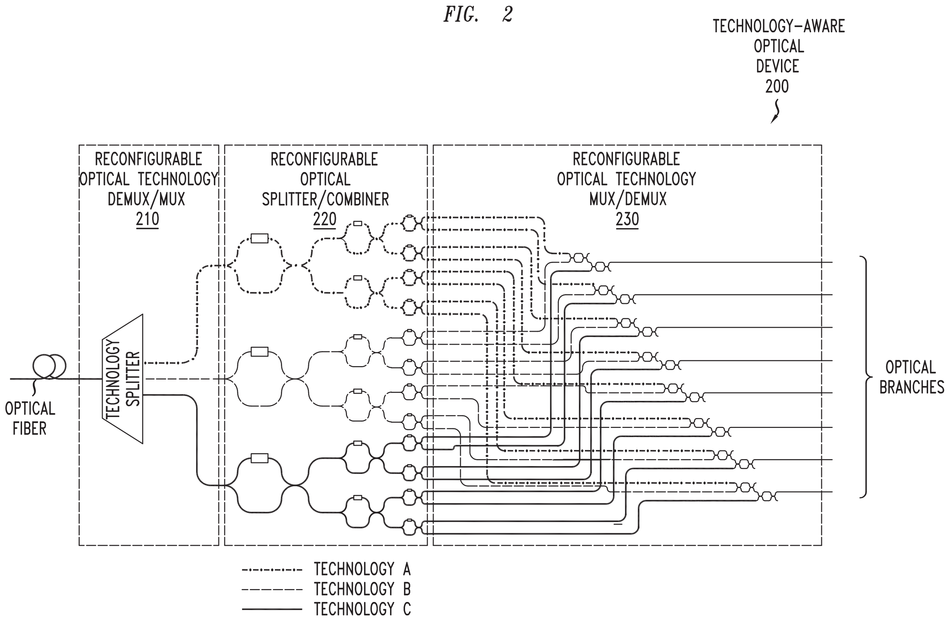

FIG. 2 depicts an example embodiment of a technology-aware optical device including a reconfigurable optical technology demultiplexer/multiplexer, a reconfigurable optical splitter/combiner, and a reconfigurable optical technology multiplexer/demultiplexer.

As illustrated in FIG. 2, the technology-aware optical device 200 is configured to support co-existence of three optical technology types for eight optical branches. It will be appreciated that the technology-aware optical device 200 may be adapted to support fewer or more optical technology types (e.g., two optical technology types, four optical technology types, or the like), fewer or more optical branches (e.g., four optical branches, sixteen optical branches, thirty-two optical branches, sixty-four optical branches, or the like), or the like, as well as various combinations thereof.

As illustrated in FIG. 2, the technology-aware optical device 200 includes a reconfigurable optical technology demux/mux 210, a reconfigurable optical splitter/combiner 220, and a reconfigurable optical technology mux/demux 230. As discussed further below, the operation of the reconfigurable optical technology demux/mux 210, the reconfigurable optical splitter/combiner 220, and the reconfigurable optical technology mux/demux 230 varies depending on direction of communication as follows: (1) in the downstream direction toward the optical branches, the reconfigurable optical technology demux/mux 210 operates as a demultiplexer, the reconfigurable optical splitter/combiner 220 operates as a splitter, and the reconfigurable optical technology mux/demux 230 operates as a combiner and (2) in the upstream direction from the optical branches, the reconfigurable optical technology mux/demux 230 operates as a demultiplexer, the reconfigurable optical splitter/combiner 220 operates as a combiner, and the reconfigurable optical technology demux/mux 210 operates as a multiplexer. The reconfigurable optical splitter/combiner 220 includes three sections for the three optical technology types, respectively, with each of the three sections including three stages of optical splitter/combiner devices. The reconfigurable optical technology mux/demux 230 includes eight sections for the eight optical branches, respectively, with each of the sections including optical combiner/splitter devices for supporting combining/splitting of the three optical technology types. It is noted that the operation of the reconfigurable optical technology demux/mux 210, the reconfigurable optical splitter/combiner 220, and the reconfigurable optical technology mux/demux 230 in the downstream direction and the upstream direction is discussed further below.

In the downstream direction, the technology-aware optical device 200 is configured to receive a combined optical signal, including optical signals of the three optical technology types, over an input optical fiber received via an ODN (omitted from FIG. 2 for purposes of clarity) and intelligently control distribution of the optical signals of the three optical technology types to the eight optical branches (which may or may not have endpoints connected thereto) such that any combination of the optical signals of the three optical technology types may be delivered to any of the eight optical branches.

In the downstream direction, the reconfigurable optical technology demux/mux 210 receives a combined optical signal over a network-side optical fiber. The combined optical signal includes a combination of optical signals of the three optical technology types. The reconfigurable optical technology demux/mux 210 demultiplexes the combined optical signal to recover three optical signals of the three optical technology types and provides the three optical signals of the three optical technology types to three sections of the reconfigurable optical splitter/combiner 220, which are specific to the three optical technology types, as discussed further hereinbelow. It will be appreciated that the reconfigurable optical splitter/combiner 220 may be configured to support various other optical signal demultiplexing capabilities for controlling demultiplexing of optical signals in support of co-existence of multiple optical technology types in a point-to-multipoint optical network.

In the downstream direction, the reconfigurable optical splitter/combiner 220 may be configured to support various optical signal splitting capabilities for controlling splitting of optical signals in support of co-existence of multiple optical technology types in a point-to-multipoint optical network. The reconfigurable optical splitter/combiner 220 includes three sections which are specific to the three optical technology types. The sections of the reconfigurable optical splitter/combiner 220 for the three optical technology types are each configured to split a received input optical signal for the respective optical technology type into eight optical signals for the respective optical technology type that correspond to the eight optical branches, respectively.

In the downstream direction, the reconfigurable optical splitter/combiner 220 is configured such that (1) a first section for the first optical technology type is configured to split the input optical signal received from the reconfigurable optical technology demux/mux 210 for the first optical technology type into eight optical signals for the eight optical branches, (2) a second section for the second optical technology type is configured to split the input optical signal received from the reconfigurable optical technology demux/mux 210 for the second optical technology type into eight optical signals for the eight optical branches, and (3) a third section for the third optical technology type is configured to split the input optical signal received from the reconfigurable optical technology demux/mux 210 for the third optical technology type into eight optical signals for the eight optical branches.

In the downstream direction, the reconfigurable optical splitter/combiner 220 is configured such that, in each of the three sections, the three stages of optical splitter/combiner devices include a first stage, a second stage, and a third stage, with: (1) the first stage including a single optical splitter/combiner device configured to split the input optical signal received from the reconfigurable optical technology demux/mux 210 into two intermediate optical signals for the second stage, (2) the second stage including two optical splitter/combiner devices configured to receive the two intermediate optical signals from the first stage and split the two intermediate optical signals from the first stage into four intermediate optical signals for the third stage, and (3) the third stage including four optical splitter/combiner devices configured to receive the four intermediate optical signals from the second stage and split the four intermediate optical signals from the second stage into the eight optical signals for the eight optical branches, with the third stage outputting the eight optical signals for the eight optical branches to the reconfigurable optical technology mux/demux 230. It will be appreciated that the optical splitter/combiner devices of the various stages of the various sections of the reconfigurable optical splitter/combiner 220 may be implemented in various ways (e.g., as tunable Mach-Zehnder interferometers or using other suitable types of optical coupling devices).

In the downstream direction, the reconfigurable optical splitter/combiner 220 is configured to control distribution of optical power of the optical technology types across the eight optical branches. For example, for each optical technology type, the corresponding section for the optical technology type may be configured to control distribution of the optical power of the optical input signal for the optical technology type across the eight optical branches. The reconfigurable optical splitter/combiner 220 may be configured such that, for each optical technology type, only those endpoints that require optical signals of that optical technology type are considered in the optical power distribution control process applied for the section of the reconfigurable optical splitter/combiner 220 providing optical signal splitting functions for that optical technology type, respectively. The reconfigurable optical splitter/combiner 220 may be configured to support various types of optical power distribution control, some of which are discussed further below.

In the downstream direction, the reconfigurable optical splitter/combiner 220 may be configured such that the optical power distribution may be controlled to prevent any optical power from being provided to any of the eight optical branches which do not have an endpoint that is utilizing that optical technology type (e.g., either the optical branch does not have an endpoint connected or the connected endpoint is using a different optical technology type(s)). For example, for each optical technology type, optical power of the input optical signal for the optical technology type may be blocked from being output from the corresponding section of the reconfigurable optical splitter/combiner 220 for ones of the optical branches which are not utilizing that optical technology type. For example, where only three of the eight optical branches have associated endpoints which are utilizing an optical technology type, the optical power of the input optical signal for the optical technology type, rather than being evenly split across the eight optical branches, may be controlled to only be split across the three optical branches that have the three associated endpoints which are utilizing an optical technology type, thereby improving communications for the three associated endpoints which are utilizing the optical technology type.

In the downstream direction, the reconfigurable optical splitter/combiner 220 may be configured such that the optical power distribution may be controlled to distribute the optical power of the optical input signal for the optical technology type across relevant ones of the eight optical branches (namely, ones of the optical branches which are utilizing that optical technology type as discussed above) in accordance with lengths of the optical branches (e.g., distance of the endpoints from the location of the technology-aware optical device 200). For example, where only two of the eight optical branches have associated endpoints which are utilizing an optical technology type and the two endpoints are located at distances from the technology-aware optical device 200 such that one of the two endpoints is located twice as far as the other of the two endpoints, the optical power of the input optical signal for the optical technology type, rather than being evenly split across the eight optical branches, may be controlled to only be split across the two optical branches that have the two associated endpoints which are utilizing an optical technology type such that the one of the two endpoints that is located twice as far as the other of the two endpoints receives twice the optical power as the other of the two endpoints, thereby improving communications for the two associated endpoints which are utilizing the optical technology type.

In the downstream direction, the reconfigurable optical technology mux/demux 230 may be configured to support various optical signal multiplexing capabilities for controlling multiplexing of optical signals in support of co-existence of multiple optical technology types in a point-to-multipoint optical network. The reconfigurable optical technology mux/demux 230 includes eight sections which are specific to the eight optical branches. The sections of the reconfigurable optical technology mux/demux 230 for the eight optical branches are each configured to multiplex the three optical signals output by the reconfigurable optical splitter/combiner 220 for the three optical technology types to provide the combined optical output signals for the eight optical branches, respectively. It will be appreciated that, although each section of the reconfigurable optical technology mux/demux 230 is configured to combine three optical signals output by the reconfigurable optical splitter/combiner 220 for the three optical technology types to provide the combined optical output signal for the associated optical branch, for any given optical branch it is possible that optical signals may or may not be output by the reconfigurable optical splitter/combiner 220 for any of the three optical technology types (depending on whether there is an endpoint associated with the optical branch and, if there is an endpoint associated with the optical branch, which optical technology type(s) the endpoint is currently using).

In the downstream direction, the reconfigurable optical technology mux/demux 230, as indicated above, includes eight sections configured to multiplex optical signals for the eight optical branches, respectively. More specifically, the reconfigurable optical technology mux/demux 230, for a given optical branch, includes a section that is configured to receive a first optical output signal for the first optical technology type that is output by the first section of the reconfigurable optical splitter/combiner 220 for the given optical branch, receive a second optical output signal for the second optical technology type that is output by the second section of the reconfigurable optical splitter/combiner 220 for the given optical branch, receive a third optical output signal for the third optical technology type that is output by the third section of the reconfigurable optical splitter/combiner 220 for the given optical branch, and multiplex the three optical signals to form the combined optical signal for the optical branch that is then output by the reconfigurable optical technology mux/demux 230.

In the downstream direction, the reconfigurable optical technology mux/demux 230 is configured such that each of the eight sections includes one or more optical combiner/splitter devices configured to combine the first optical output signal for the first optical technology type, the second output signal for the second optical technology type, and the third optical signal for the third optical technology type to form the combined optical output signal for the optical branch, respectively. In the reconfigurable optical technology mux/demux 230, the one or more optical combiner/splitter devices of a given optical branch may be implemented as a 3-way combiner configured to combine the three optical signals of the three optical technology types in a single stage, a pair of 2-way combiners configured to combine the three optical signals of the three optical technology types in a pair of stages, or the like. It will be appreciated that the optical combiner/splitter devices of the various sections of the reconfigurable optical technology mux/demux 230 may be implemented in various ways (e.g., as tunable Mach-Zehnder interferometers or using other suitable types of optical coupling devices).

In the downstream direction, the reconfigurable optical technology mux/demux 230, as indicated above, is configured to output a combined optical output signal for each of the optical branches, respectively. However, since it is possible that, for any given optical branch, the optical branch may not have an endpoint connected thereto or may be supporting an endpoint that is only utilizing a subset of the optical technology types, it is possible that any given section of the reconfigurable optical combiner/splitter 220 may either not provide any combined optical output signal at all or may provide a combined optical output signal that only includes a single optical signal of a single optical technology type or a combined optical output signal that is a combination of optical signals of a subset of optical technology types. For example, where the first optical branch has an XGS ONU connected thereto, the combined optical output signal output for the first optical branch may include only an XGS-based optical signal. For example, where the second optical branch has connected thereto an ONU supporting XGS-PON and 25GS-PON, the combined optical output signal output for the second optical branch may include an XGS-based optical signal and a 25G-based optical signal. For example, where the third optical branch has connected thereto an ONU supporting XGS-PON, 25GS-PON, and 50G-PON, the combined optical output signal output for the third optical branch may include an XGS-based optical signal, a 25G-based optical signal, and a 50G-based optical signal. For example, where the fourth optical branch does not have any ONU connected thereto, the output of the reconfigurable optical technology mux/demux 230 for the fourth optical branch may not have any optical power thereon (i.e., no optical signal is output since the fourth optical branch is not being used). It will be appreciated that, in this manner, each of the optical branches may have zero, one, two, or three optical signals output therefor.

In the upstream direction, the technology-aware optical device 200 is configured to receive optical signals over the optical branches from the ONUs 140 (omitted from FIG. 2 for purposes of clarity) and intelligently control convergence of the three optical signals types from the eight optical branches (which may or may not have endpoints connected thereto) such that optical signals of the three optical signal types are delivered only to the upstream endpoints capable of handling the three optical signal types (e.g., the OLT for Technology A only receives Technology A optical signals from the optical branches, the OLT for Technology B only receives Technology B optical signals from the optical branches, and the OLT for Technology C only receives Technology C optical signals from the optical branches).

It will be appreciated that the operation of the technology-aware optical device 200 in the upstream direction will be substantially reciprocal the operation of the technology-aware optical device 200 in the downstream direction in terms of the functions performed for supporting communication of the optical signals of the optical technology types (e.g., the reconfigurable optical technology mux/demux 230 operates as a multiplexer in the downstream direction but as a demultiplexer in the upstream direction, the reconfigurable optical splitter/combiner 220 operates as a splitter in the downstream direction but as a combiner in the upstream direction, and the reconfigurable optical technology demux/mux 210 operates as a demultiplexer in the downstream direction but as a multiplexer in the upstream direction), such that the operation of the technology-aware optical device 200 in the upstream direction may be understood at least from the description of the operation of the technology-aware optical device 200 in the downstream direction as well as from additional description of the operation of the technology-aware optical device 200 in the upstream direction as provided further below.

In the upstream direction, the reconfigurable optical technology mux/demux 230 operates as a demultiplexer to demultiplex combined optical signals received from the optical branches, respectively, into the optical signals of the optical technology types and to direct the optical signals of the optical technology types to the corresponding sections of the reconfigurable optical splitter/combiner 220 dedicated to handling the optical technology types, respectively. The reconfigurable optical technology mux/demux 230, for each of optical branches, includes one or more optical mux/demux devices configured to demultiplex a combined optical signal received via the optical branch into the constituent optical signals of the optical technology types which are present within the combined optical signal (e.g., where the combined optical signals includes optical signals of each of the three optical technology types, demultiplexing the combined optical signal of the optical branch into the first optical output signal for the first optical technology type, the second output signal for the second optical technology type, and the third optical signal for the third optical technology type). The split optical signals output by the optical mux/demux device(s) are directed to the sections of the reconfigurable optical splitter/combiner 220 by optical technology type (namely, eight optical signals of first optical technology type output for the eight optical branches are directed to the first (top) section of the reconfigurable optical splitter/combiner 220 dedicated to the first optical technology type, eight optical signals of second optical technology type output for the eight optical branches are directed to the second (middle) section of the reconfigurable optical splitter/combiner 220 dedicated to the second optical technology type, and the eight optical signals of third optical technology type output for the eight optical branches are directed to the third (bottom) section of the reconfigurable optical splitter/combiner 220 dedicated to the third optical technology type.

In the upstream direction, the reconfigurable optical splitter/combiner 220 operates as a combiner to combine optical signals received from the optical branches into combined optical signals of the optical technology types and to direct the combined optical signals of the optical technology types to the corresponding sections of the reconfigurable optical technology demux/mux 210 dedicated to handling the optical technology types, respectively. The reconfigurable optical splitter/combiner 220 is configured such that (1) a first section for the first optical technology type is configured to combine the eight optical signals of the first optical technology type received from the reconfigurable optical technology mux/demux 230 for the eight optical branches into a single combined optical signal of the first optical technology type that is provided to the reconfigurable optical technology demux/mux 210, (2) a second section for the second optical technology type is configured to combine the eight optical signals of the second optical technology type received from the reconfigurable optical technology mux/demux 230 for the eight optical branches into a single combined optical signal of the second optical technology type that is provided to the reconfigurable optical technology demux/mux 210, and (3) a third section for the third optical technology type is configured to combine the eight optical signals of the third optical technology type received from the reconfigurable optical technology mux/demux 230 for the eight optical branches into a single combined optical signal of the third optical technology type that is provided to the reconfigurable optical technology demux/mux 210.

In the upstream direction, the reconfigurable optical technology demux/mux 210 operates as a multiplexer to multiplex the optical signals received from the three sections of the reconfigurable optical splitter/combiner 220 for the three optical technology types into a combined optical signal including the optical signals of the three optical technology types. Namely, the reconfigurable optical technology demux/mux 210 receives a combined optical signal for the first optical technology type that is output by a final combiner in the stage of combiners of the first section of the reconfigurable optical splitter/combiner 220, a combined optical signal for the second optical technology type that is output by a final combiner in the stage of combiners of the second section of the reconfigurable optical splitter/combiner 220, and a combined optical signal for the third optical technology type that is output by a final combiner in the stage of combiners of the third section of the reconfigurable optical splitter/combiner 220, and outputs a combined optical signal including the optical signals of the three optical technology types. The reconfigurable optical technology demux/mux 210 outputs the combined optical signal including the optical signals of the three optical technology types such that the combined optical signal including the optical signals of the three optical technology types may be further propagated upstream (e.g., toward a set of OLTs configure to receive and handle the optical signals of the optical technology types, such as a single OLT configured to support each of the three optical technology types, three OLTs configured to respectively support the three optical technology types, or the like). It will be appreciated that, although primarily presented with respect to configuration of the technology-aware optical device 200 to support specific numbers of optical technology types for specific numbers of optical branches, the technology-aware optical device 200 may be adapted to support fewer or more optical technology types (e.g., two optical technology types, four optical technology types, or the like), fewer or more optical branches (e.g., four optical branches, sixteen optical branches, thirty-two optical branches, sixty-four optical branches, or the like), or the like, as well as various combinations thereof.

It will be appreciated that the technology-aware optical device 200, although primarily presented with respect to example embodiments having specific types, numbers, and arrangements of elements, may include various other types, numbers, and/or arrangements of elements. For example, although primarily presented with respect to example embodiments in which the reconfigurable optical splitter/combiner 220 is implemented as an integrated device including multiple sections for the multiple optical technology types, in at least some example embodiments the reconfigurable optical splitter/combiner 220 may be replaced with an array of optical technology mux/demux elements in place of the sections for the optical technology types, respectively. It will be appreciated that the technology-aware optical device 200 may include various other types, numbers, and/or arrangements of elements.

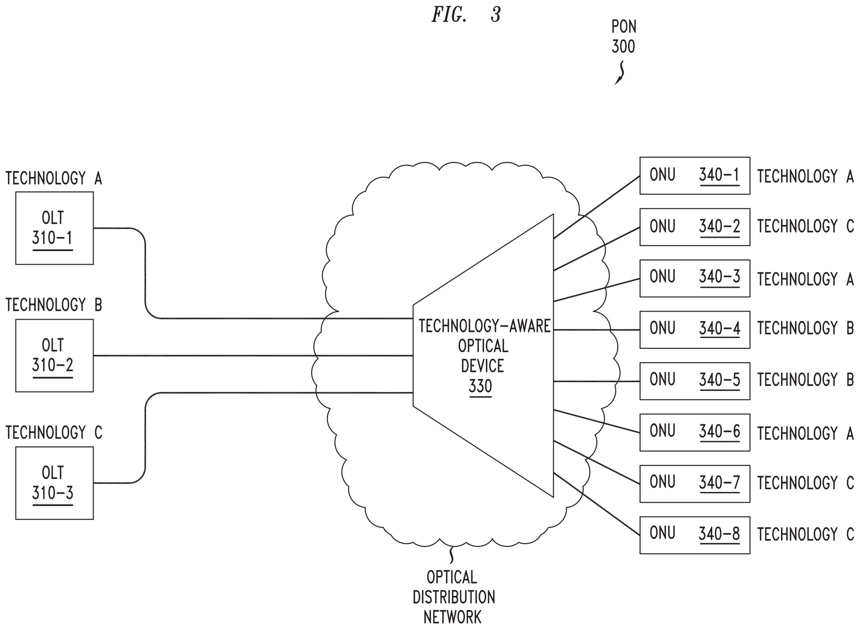

FIG. 3 depicts an example embodiment of a passive optical network (PON) configured to support use of a technology-aware optical device configured to support co-existence of multiple optical technology types.

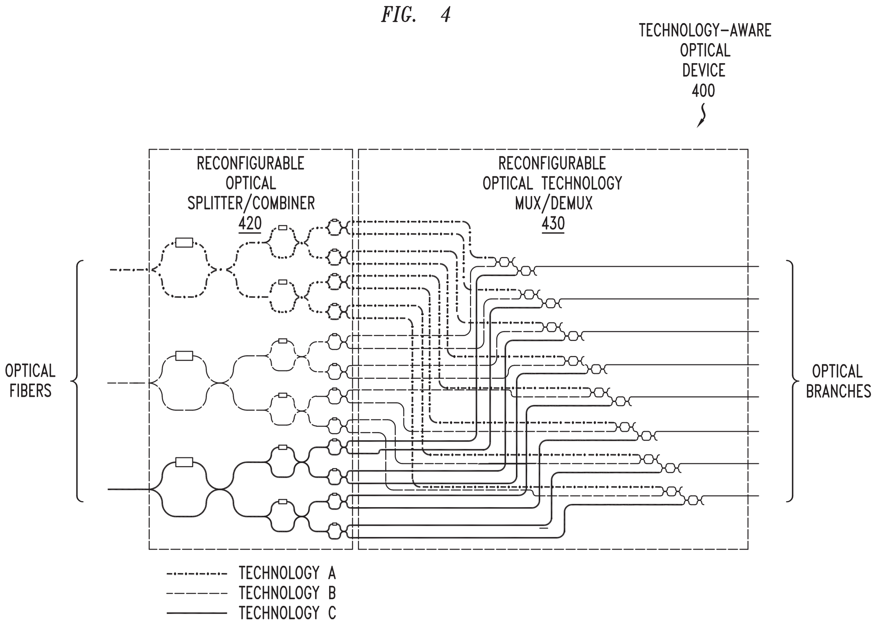

The PON 300, similar to the PON 100 of FIG. 1, is configured to operate as an optical network of an optical communication service provider to provide network access to a set of users, based on optical communications, in various contexts and based on various technologies. The PON 300, similar to the PON 100 of FIG. 1, includes a set of OLTs 310-1 to 310-3 (collectively, OLTs 310), a technology-aware optical device 330 disposed in an ODN, and a set of optical network units (ONUs) 340-1 - 340-8 (collectively, ONUs 340). The PON 300, however, unlike the PON 100 of FIG. 1, omits the coexistence element between the OLTs 310 and the technology-aware optical device 330, thereby obviating the need for inclusion of the reconfigurable optical technology demux/mux in the technology-aware optical device 330 (namely, the reconfigurable optical technology demux/mux 210 in the technology-aware optical device 200 of FIG. 2 is omitted from the technology-aware optical device of FIG. 4). It will be appreciated that the PON 300 may include various other elements for supporting optical communications for the set of users.

The PON 300, similar to the PON 100 of FIG. 1, supports concurrent use of three optical technology types in the form of three PON generations which are referred to as Technology A, Technology B, and Technology C. For example, the three PON generations of the three technology types may include any three of XGS-PON, 25GS-PON, 50G-PON, VHSP, or the like. The three OLTs 310 are configured to support optical communications based on the three optical technology types (illustratively, OLT 310-1 is configured to support optical communications based on Technology A, OLT 310-2 is configured to support optical communications based on Technology B, and OLT 310-3 is configured to support optical communications based on Technology C). The technology-aware optical device 330, as discussed further below, is configured to perform various optical multiplexing-demultiplexing functions, including various combinations of optical multiplexing functions and optical demultiplexing functions (which may be in the form of optical splitting functions and/or optical combining functions) for providing intelligent control over communication of the optical signals of the three optical technology types between the OLTs 310 and the ONUs 340. The ONUs 340 each are utilizing only one of the available optical technology types (illustratively, ONUs 340-1, 340-3, and 340-6 are utilizing Technology A, ONUs 340-4 and 340-5 are utilizing Technology B, and ONUs 340-2, 340-7, and 340-8 are utilizing Technology C).

The technology-aware optical device 330 may be configured to operate in a manner similar to the technology-aware optical device 130 of FIG. 1, except that the optical signals of the three optical technology types are handled separately between the OLTs 310 and the technology aware optical device 330 (as opposed to as a combined optical signal as in the case of the technology-aware optical device 130 of FIG. 1). For example, the technology-aware optical device 330 may be configured to control delivery of optical signals, downstream from the OLTs 310 toward the ONUs 340 and/or upstream from the ONUs 130 toward the OLTs 310, based on various optical multiplexing-demultiplexing functions, including various combinations of optical multiplexing functions and optical demultiplexing functions (which may be in the form of optical splitting functions and/or optical combining functions) for providing intelligent control over communication of the optical signals of the three optical technology types between the OLTs 310 and the ONUs 340. For example, the technology-aware optical device 330 may be configured to control communication of the optical signals of the optical technology types between the OLTs 310 and the ONUs 340 based on use of optical multiplexers-demultiplexers supporting optical multiplexing-demultiplexing capabilities. For example, the technology-aware optical device 330 may be implemented in various ways (e.g., based on various types of optical technologies, electronics technologies, mechanical technologies, or the like, as well as various combinations thereof). For example, the technology-aware optical device 330 may be configured to be compatible with ITU-T optical technology co-existence scenarios, e.g., the technology-aware optical device 330 may be configured to be compatible with the co-existence scenario depicted and described in Figure 6-4 of ITU-T G.9805 (e.g., the technology-aware optical device 330 may be used to replace the passive optical splitter/combiner depicted in Figure 6-4). For example, the technology-aware optical device 330 may be configured to utilize various power and control signals for supporting operation of the technology-aware optical device 130 within the PON 100.

It will be appreciated that the PON 300, although primarily presented with respect to example embodiments having specific types, numbers, and arrangements of elements, may include various other types, numbers, and/or arrangements of elements. For example, although primarily presented with respect to example embodiments in which the technology-aware optical device 330 is a 1x8 optical device supporting 8 optical branches associated with 8 ONUs 340, the technology-aware optical device 330 may support fewer or more optical branches for fewer or more ONUs (e.g., a 1x4 optical device, a 1x16 optical device, a 1x32 optical device, or the like). For example, although primarily presented with respect to example embodiments in which the ODN of the optical service provider includes the technology-aware optical device 330 as well as optical fibers connecting the OLTs 310 and the ONUs 340 with the ODN, the ODN may include various other elements (e.g., conventional splitters, conventional combiners, or the like) configured to supporting various functions (e.g., splitting, combining, amplifying, monitoring, controlling, or the like) for optical signals in the ODN. For example, although primarily presented with respect to example embodiments in which the PON 300 includes a single technology-aware optical device 330, the PON 300 may include additional technology-aware optical devices which may be arranged in one or more hierarchical levels (e.g., in parallel, cascaded, or using a combination thereof) to support various numbers of optical branches. It will be appreciated that the PON 300 may include various other types, numbers, and/or arrangements of elements.

FIG. 4 depicts an example embodiment of a technology-aware optical device, including a reconfigurable optical splitter/combiner and a reconfigurable optical technology multiplexer/demultiplexer, suitable for use as the technology-aware optical device of FIG. 3.

As illustrated in FIG. 4, the technology-aware optical device 400 is configured to support co-existence of three optical technology types for eight optical branches. It will be appreciated that the technology-aware optical device 400 may be adapted to support fewer or more technology types (e.g., two optical technology types, four optical technology types, or the like), fewer or more optical branches (e.g., four optical branches, sixteen optical branches, thirty-two optical branches, sixty-four optical branches, or the like), or the like, as well as various combinations thereof.

As illustrated in FIG. 4, the technology-aware optical device 400 of FIG. 4 is similar to the technology-aware optical device 200 of FIG. 2, with the exception that it does not include a technology demux/mux (which is omitted because the three optical signals for the three optical technology types are separated, such as based on use of three separate OLTs for the three optical technology types or based on use of multiplexing/demultiplexing within the ODN). More specifically, the technology-aware optical device 400 includes a reconfigurable optical splitter/combiner 420 configured to operate in a manner similar to the optical splitter/combiner 220 of FIG. 2 and a reconfigurable optical technology mux/demux 430 configured to operate in a manner similar to the reconfigurable optical technology mux/demux 230 of FIG. 2, such that further description of the operation of the reconfigurable optical splitter/combiner 420 and the reconfigurable optical technology mux/demux 430 is omitted.

It will be appreciated that, although primarily presented with respect to configuration of the technology-aware optical device 400 to support specific numbers of optical technology types for specific numbers of optical branches, the technology-aware optical device 400 may be adapted to support fewer or more optical technology types (e.g., two optical technology types, four optical technology types, or the like), fewer or more optical branches (e.g., four optical branches, sixteen optical branches, thirty-two optical branches, sixty-four optical branches, or the like), or the like, as well as various combinations thereof.

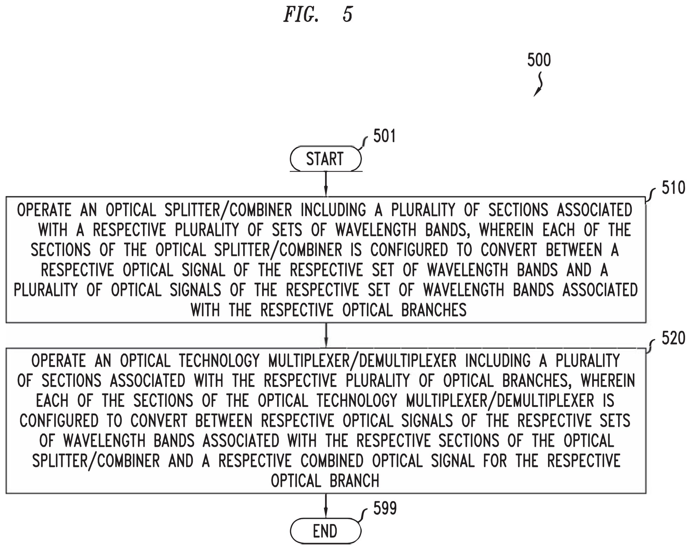

FIG. 5 depicts an example embodiment of a method for use by a technology-aware optical device configured to support co-existence of multiple optical technology types. It will be appreciated that, although primarily presented as being performed serially, at least a portion of the functions of the method 500 may be performed contemporaneously or in a different order than as presented with respect to FIG. 5. At block 501, method 500 begins. At block 510, operate an optical splitter/combiner including a plurality of sections associated with a respective plurality of sets of wavelength bands, wherein each of the sections of the optical splitter/combiner is configured to convert between a respective optical signal of the respective set of wavelength bands and a plurality of optical signals of the respective set of wavelength bands associated with the respective optical branches. At block 520, operate an optical technology multiplexer/demultiplexer including a plurality of sections associated with the respective plurality of optical branches, wherein each of the sections of the optical technology multiplexer/demultiplexer is configured to convert between respective optical signals of the respective sets of wavelength bands associated with the respective sections of the optical splitter/combiner and a respective combined optical signal for the respective optical branch. At block 599, the method 500 ends. It will be appreciated that various functions presented herein with respect to FIGs. 1 - 4 may be incorporated within the context of the method 500 of FIG. 5.

FIG. 6 depicts an example embodiment of use of a technology-aware optical device configured to support co-existence of multiple optical technology types to support optical technology reconfigurability capabilities.

More specifically, FIG. 6 demonstrates the technology reconfigurability advantage on an exemplary access network with three different optical technology types (Technology A, Technology B, Technology C) where a portion of the technology-aware optical device outputs are serving users of the different technology types and a portion of the technology-aware optical device outputs are unused and not serving users (where such unused technology-aware optical device outputs can be treated as a fourth "null" technology type Ø).

As illustrated on the left side of FIG. 6, in a PON 610 supporting the three optical technology types, the technology-aware optical device supports 32 optical branches, in which 8 optical branches supports users of Technology A, 4 optical branches support users of Technology B, 2 optical branches support users of Technology C, and 18 of the optical branches are unused and not connected to any users. As further illustrated, within each of the optical technology types, the set of users of the optical technology types may be located at various distances from the technology-aware optical device.

As illustrated on the right side of FIG. 6, the plot 620 shows loss as a function of distance over the exemplary access network, along with some ONUs scattered along the fiber length, up to 20 km fiber in total. As illustrated, as compared to a conventional passive splitter/combiner (dashed line, representing insertion loss for an arbitrarily located ONU), the technology-aware optical device can significantly reduce the insertion loss (by multiple dBs), depending on the number of users to be supported by a given optical technology type and the distances of the users of the given optical technology type from the technology-aware optical device.

For example, for Technology A, the optical power available for supporting Technology A, rather than being split across all of the optical branches, may be split equally across the eight optical branches supporting the eight users of Technology A, thereby resulting in an average +6dB gain for the set of users of Technology A.

For example, for Technology B, the optical power available for supporting Technology B, rather than being split across all of the optical branches, may be split equally across the four optical branches supporting the four users of Technology B, thereby resulting in an average +9dB gain for the set of users of Technology B.

For example, for Technology C, the optical power available for supporting Technology C, rather than being split across all of the optical branches, may be split equally across the two optical branches supporting the two users of Technology C, thereby resulting in an average +12dB gain for the set of users of Technology C.

It will be appreciated that, although primarily presented with respect to a case in which each optical branch is using only a single optical technology type, such technology reconfigurability capabilities may be adapted to support cases in which one or more of the optical branches is using multiple of the available optical technology type.

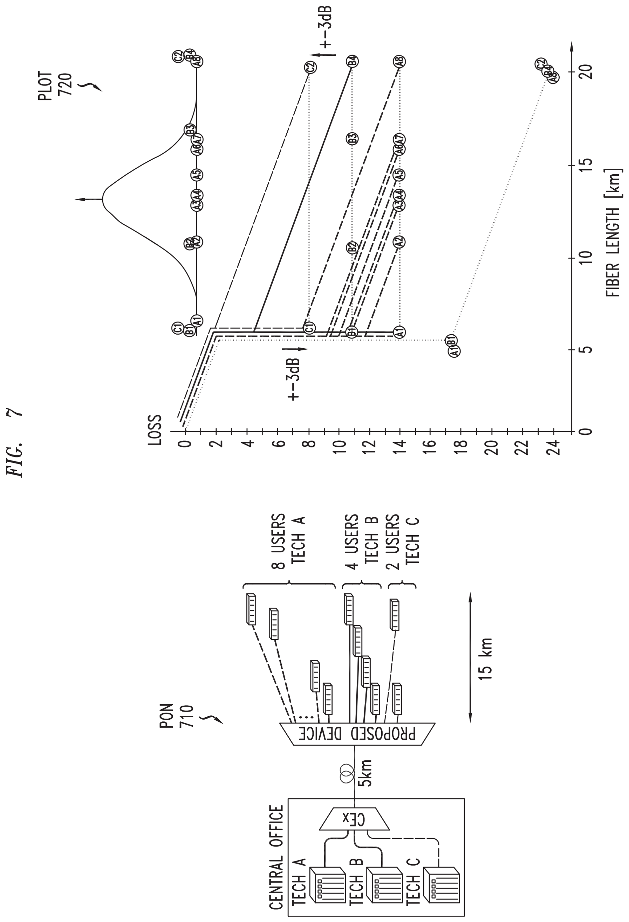

FIG. 7 depicts an example embodiment of use of a technology-aware optical device configured to support co-existence of multiple optical technology types to support power balancing capabilities.

More specifically, FIG. 7 demonstrates the more advanced power balancing capabilities, enabled by the variable splitter/combiner and combiner/splitter stages of the technology-aware optical device, on an exemplary access network with three different optical technology types (Technology A, Technology B, Technology C) where a portion of the technology-aware optical device outputs are serving users of the different technology types and a portion of the technology-aware optical device outputs are unused and not serving users (where such unused technology-aware optical device outputs can be treated as a fourth "null" technology type Ø). As illustrated in FIG. 7, the technology-aware optical device is configured to support power balancing between the users such that the received power for each user is equalized.

As illustrated on the left side of FIG. 7, in a PON 710 supporting the three optical technology types, the technology-aware optical device supports 32 optical branches, in which 8 optical branches supports users of Technology A, 4 optical branches support users of Technology B, 2 optical branches support users of Technology C, and 18 of the optical branches are unused and not connected to any users. As further illustrated, within each of the optical technology types, the set of users of the optical technology types may be located at various distances from the technology-aware optical device.

As illustrated on the right side of FIG. 7, the plot 720 shows loss as a function of distance over the exemplary access network, along with some ONUs scattered along the fiber length, up to 20 km fiber in total. As illustrated, power balancing equalizes the power within each optical technology type. Here, for purposes of clarity, a rather symmetric normal distribution was assumed (e.g., for the two users of Technology C, the change for the closer user is approximately -3dB and the change for the farther user is approximately +3dB).

It will be appreciated that, although primarily presented with respect to a case in which the technology-aware optical device is used to optimize a particular metric (namely, power balancing), the optical splitter also may be configured to support optimization of various other metrics, including discrete metrics (e.g., bit error ratio performance) and/or nonlinear continuation metrics (e.g., capacity via probabilistic shaping versus received power).

It will be appreciated that, although primarily presented with respect to a case in which each optical branch is using only a single optical technology type, such technology reconfigurability capabilities may be adapted to support cases in which one or more of the optical branches is using multiple of the available optical technology type.

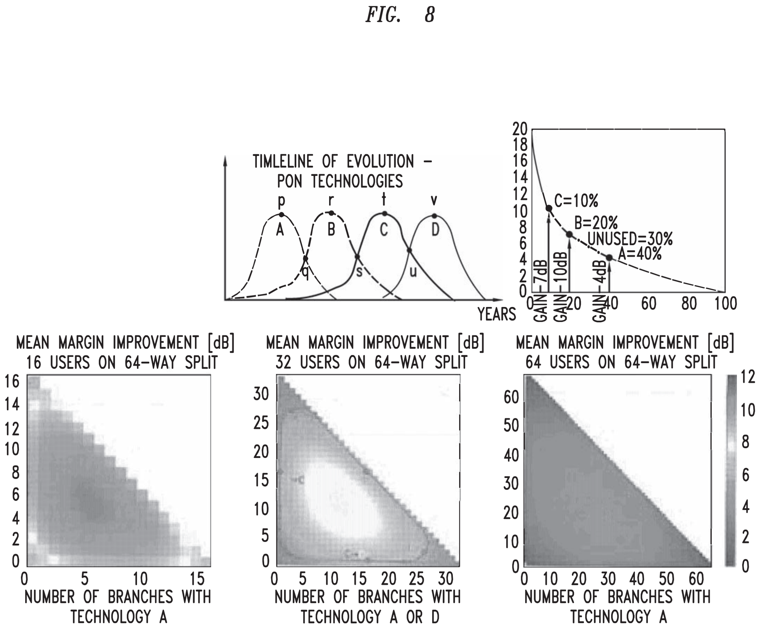

FIG. 8 depicts an example embodiment of use of a technology-aware optical device configured to support co-existence of multiple optical technology types to support optical technology type evolution capabilities.

More specifically, FIG. 8 depicts, when using the technology-aware optical device to support a rolling-window technology coexistence schedule (as illustrated at the top center of FIG. 8), the potential advantage of the technology-aware optical device for as a function of the percentage of users connected to the technology-aware optical device (as illustrated at the top right of FIG. 8). It is noted that, for purposes of clarity, FIG. 8 is based on an assumption that each optical branch supported by the technology-aware optical device requires only one of the optical technology types (which also may include the case of the "null" technology type) to be delivered to the associated endpoint of the optical branch (however, it will be appreciated that any of the optical branches may support multiple optical technology types).

As illustrated at the bottom FIG. 8, the triangle-shaped plots show the advantage of the technology-aware optical device in a three-generation rolling-window coexistence schedule scenario promoted in the ITU-T, where a total number of users (equal to the number of populated optical branches) is defined at the top of each plot (from left to right: 16, 32, 64 users), while the number of users requiring the various optical technology types (namely Technology A, Technology B, Technology C, or Technology D) is varied (horizontal axis = number of users of Technology A or Technology D, vertical axis = number of users of Technology B, number of users of Technology C = total number of users - number of users of Technology A - number of users of Technology B). It can be observed that for a large number of unused optical branches, as well as for equal mix between different technologies, the largest improvement in power budget is achieved.

As further illustrated in the triangle-shaped plot at the middle-bottom of FIG. 8, a possible cycle of optical technology type evolution is shown in the form of the solid line loop within the triangle-shaped plot, which demonstrates how the number of users of each optical technology type, and the power budget improvement associated therewith, can change as new optical technology types become dominant on the market. It will be appreciated that this solid line loop within the triangle-shaped plot, as well as the points indicated on the solid line loop within the triangle-shaped plot, are related to the "timeline of evolution" plot above the middle triangle.

Various example embodiments of a technology-aware optical device configured to support co-existence of multiple optical technology types within a point-to-multipoint optical network may provide various advantages or potential advantages. For example, various example embodiments of a technology-aware optical device configured to support co-existence of multiple optical technology types within a point-to-multipoint optical network may be configured to enable telecommunications service providers which require co-existence of multiple optical access technologies over a conventional fiber access architecture using a point-to-multipoint infrastructure (in which case not all of the optical technology types need to be delivered to every endpoint since most endpoints typically only utilize a single optical technology type) to provide flexible and efficient delivery of any optical technology types for any endpoints without supporting communication of optical signals for endpoints where the endpoints do not need to use those optical signals (as such optical signals are dropped at the endpoint and, thus, wasted in the downstream direction and any optical signals needed by the endpoints can be supported in the upstream direction). For example, various example embodiments of a technology-aware optical device configured to support co-existence of multiple optical technology types within a point-to-multipoint optical network may be configured to operate as a low-loss technology-aware optical device that reduces the relatively large losses which may be experienced when multiple optical technology types and unconnected optical splitter branches coexist in a point-to-multipoint optical network. For example, various example embodiments of a technology-aware optical device configured to support co-existence of multiple optical technology types within a point-to-multipoint optical network may be configured to provide significant power budget relaxation when multiple optical technology types and unconnected optical splitter branches coexist in a point-to-multipoint optical network, thereby leading to less demanding implementation of optical access transceiver systems. For example, various example embodiments of a technology-aware optical device configured to support co-existence of multiple optical technology types within a point-to-multipoint optical network may be configured to achieve a lower insertion loss per optical technology by ensuring that the optical signal of each optical technology type is supported only for optical branches that have endpoints that use that optical technology type rather than requiring the optical signals of each of the optical technology types to be supported on each of the optical branches (e.g., leveraging the fact that the co-existence of multiple optical technology types in one point-to-multipoint optical network will typically lower the required split ratio per optical technology type to be less than the total number of outputs of the optical splitter such that unused optical branches can be treated as "null technology" outputs from which optical power can be diverted to other optical outputs, thereby resulting in a lower insertion loss per optical technology type). For example, various example embodiments of a technology-aware optical device configured to support co-existence of multiple optical technology types within a point-to-multipoint optical network may be configured to permit the removal of wavelength filters at the endpoint receivers (e.g., on the ONUs for downstream operation or on the OLTs for upstream operation) since the optical technology separation between the multiple optical technology types is being performed at the technology-aware optical device (rather than simply sending optical signals of each of the multiple optical technology types on each of the optical paths of the ODN). For example, various example embodiments of a technology-aware optical device configured to support co-existence of multiple optical technology types within a point-to-multipoint optical network may be configured to significantly alleviate the power budget crunch that has become increasingly more severe with each new PON generation (e.g., support for larger power budget classes (starting from C+) is already relatively difficult at 50G and has resulted in the use of the optical amplifiers and even two parallel power budget specifications in ITU-T, and this problem will be exacerbated for higher wavelengths due to the worsening receiver sensitivity caused by dispersion penalty or when introducing TWDM operation due to extra insertion losses from WDM components and will also remain in future coherent PON since in coherent PON very good receiver sensitivity is offset by poor transmitter output power). For example, various example embodiments of a technology-aware optical device configured to support co-existence of multiple optical technology types within a point-to-multipoint optical network, when utilizing PLC technology, may be configured to cover O-band and C-band operation while also supporting bidirectional operation, thereby enabling convergence of a wide range of optical technologies. It will be appreciated that various example embodiments of a technology-aware optical device configured to support co-existence of multiple optical technology types within a point-to-multipoint optical network may provide various other advantages or potential advantages.

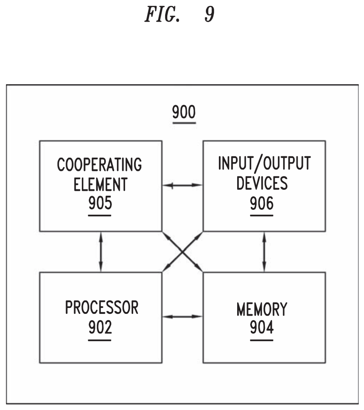

FIG. 9 depicts an example embodiment of a computer suitable for use in performing various functions presented herein.

The computer 900 includes a processor 902 (e.g., a central processing unit (CPU), a processor, a processor having a set of processor cores, a processor core of a processor, or the like) and a memory 904 (e.g., a random access memory (RAM), a read-only memory (ROM), or the like). In at least some example embodiments, the computer 900 may include at least one processor and at least one memory storing instructions that, when executed by the at least one processor, cause the computer to perform various functions presented herein.

The computer 900 also may include a cooperating element 905. The cooperating element 905 may be a hardware device. The cooperating element 905 may be a process that can be loaded into the memory 904 and executed by the processor 902 to implement various functions presented herein (in which case, for example, the cooperating element 905 (and associated data structures) can be stored on a non-transitory computer readable medium, such as a storage device or other suitable type of storage element (e.g., a magnetic drive, an optical drive, or the like)).

The computer 900 also may include one or more input/output devices 906. The input/output devices 906 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 900 may represent a general architecture and functionality suitable for implementing functional elements described herein, portions of functional elements described herein, or the like, as well as various combinations thereof. For example, the computer 900 may provide a general architecture and functionality that is suitable for implementing one or more elements presented herein. For example, the computer 900 may provide a general architecture and functionality that is suitable for implementing at least one of an OLT or a portion thereof, an ONU or a portion thereof, one or more control elements configured to control configuration of the one or more configurable or reconfigurable elements presented herein, or the like, as well as various combinations thereof.

It will be appreciated that various functions presented herein may be implemented within hardware, a combination of hardware and software, or the like. For example, at least some of the functions presented herein may be implemented in hardware (e.g., using a general purpose computer, one or more application specific integrated circuits, and/or any other hardware equivalents). For example, at least some of the functions presented herein may be implemented in a combination of hardware and software (e.g., via implementation of software on one or more processors, for executing on a general purpose computer (e.g., via execution by one or more processors) so as to provide a special purpose computer, and the like).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored within non-transitory computer-readable media, such as within memory within a computing device operating according to the instructions, within fixed or removable media, or the like. It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other network or computing device.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An apparatus (130, 200, 330, 400) configured to support a plurality of optical branches of an optical network (100), the apparatus comprising:
- an optical splitter/combiner (220, 420) comprising a plurality of sections associated with a respective plurality of sets of wavelength bands, wherein each of the sections of the optical splitter/combiner (220, 420) is configured to convert between a respective optical signal of the respective set of wavelength bands and a plurality of optical signals of the respective set of wavelength bands associated with the respective optical branches; and
- an optical technology multiplexer/demultiplexer (210, 230, 430) comprising a plurality of sections associated with the respective plurality of optical branches, wherein each of the sections of the optical technology multiplexer/demultiplexer (210, 230, 430) is configured to convert between respective optical signals of the respective sets of wavelength bands associated with the respective sections of the optical splitter/combiner (220, 420) and a respective combined optical signal for the respective optical branch.

2. The apparatus (130, 200, 330, 400) according to claim 1, wherein the plurality of sets of wavelength bands are associated with a respective plurality of optical technology types.

3. The apparatus (130, 200, 330, 400) according to claim 2, wherein the respective plurality of optical technology types include a respective plurality of passive optical network (PON) generations.

4. The apparatus (130, 200, 330, 400) according to claim 3, wherein the respective plurality of PON generations includes at least two of an XGS-PON, a 25GS-PON, a 50G-PON, or a Very High Speed PON (VHSP).

5. The apparatus (130, 200, 330, 400) according to any of claims 1 to 4, wherein, in a direction toward the optical branches, each of the sections of the optical splitter/combiner (220, 420) is configured to split the respective optical signal of the respective set of wavelength bands to provide the plurality of optical signals of the respective set of wavelength bands associated with the respective optical branches.

6. The apparatus (130, 200, 330, 400) according to any of claims 1 to 5, wherein, in a direction toward the optical branches, each of the sections of the optical technology multiplexer/demultiplexer (210, 230, 430) is configured to multiplex the respective optical signals of the respective sets of wavelength bands associated with the respective sections of the optical splitter/combiner (220, 420) to provide the respective combined optical signal for the respective optical branch.

7. The apparatus (130, 200, 330, 400) according to any of claims 1 to 6, wherein, in a direction from the optical branches, each of the sections of the optical technology multiplexer/demultiplexer (210, 230, 430) is configured to demultiplex the respective combined optical signal for the respective optical branch to provide the respective optical signals of the respective sets of wavelength bands associated with the respective sections of the optical splitter/combiner (220, 420).

8. The apparatus (130, 200, 330, 400) according to any of claims 1 to 7, wherein, in a direction from the optical branches, each of the sections of the optical splitter/combiner (220, 420) is configured to combine the plurality of optical signals of the respective set of wavelength bands associated with the respective optical branches to provide the respective optical signal of the respective set of wavelength bands.

9. The apparatus (130, 200, 330, 400) according to any of claims 1 to 8, wherein, for at least one of the sections of the optical splitter/combiner (220, 420), the respective section of the optical splitter/combiner (220, 420) comprises at least one stage of optical splitter/combiner devices configured to convert between the respective optical signal of the respective set of wavelength bands and the plurality of optical signals of the respective set of wavelength bands associated with the respective optical branches.

10. The apparatus (130, 200, 330, 400) according to any of claims 1 to 9, wherein the plurality of optical branches incudes 2^{N} optical branches, wherein, for each of the sections of the optical splitter/combiner (220, 420), the respective section of the optical splitter/combiner (220, 420) includes N stages of optical splitter/combiner devices.

11. The apparatus (130, 200, 330, 400) according to any of claims 1 to 10, wherein, for at least one of the optical branches, the optical technology multiplexer/demultiplexer (210, 230, 430) comprises at least one optical multiplexer/demultiplexer device configured to convert between respective optical signals of the respective sets of wavelength bands associated with the respective sections of the optical splitter/combiner (220, 420) and a respective combined optical signal for the respective optical branch.

12. The apparatus (130, 200, 330, 400) according to any of claims 1 to 11, wherein the plurality of sets of wavelength bands includes X sets of wavelength bands, wherein, for each of the optical branches, the respective section for the respective optical branch comprises X-1 stages of optical technology multiplexer/demultiplexer devices.

13. The apparatus (130, 200, 330, 400) according to any of claims 1 to 12, further comprising:
a further optical technology demultiplexer/multiplexer (210, 230, 430) configured to convert between a combined optical signal comprising the plurality of sets of wavelength bands and the respective optical signals of the respective sets of wavelength bands.

14. The apparatus (130, 200, 330, 400) according to any of claims 1 to 13, wherein at least one of:
- for at least one of the optical branches, the respective combined optical signal for the respective optical branch includes optical communication signals from only one of the sets of wavelength bands;
- for at least one of the optical branches, the respective combined optical signal for the respective optical branch includes optical communication signals from a subset of the sets of wavelength bands;
- for at least one of the optical branches, the respective combined optical signal for the respective optical branch includes optical communication signals from each of the sets of wavelength bands; or
- for at least one of the optical branches, the respective combined optical signal for the respective optical branch does not includes optical communication signals from any of the sets of wavelength bands.

15. A method for supporting a plurality of optical branches of an optical network (100), the method comprising:
- operating an optical splitter/combiner (220, 420) comprising a plurality of sections associated with a respective plurality of sets of wavelength bands, wherein each of the sections of the optical splitter/combiner (220, 420) is configured to convert between a respective optical signal of the respective set of wavelength bands and a plurality of optical signals of the respective set of wavelength bands associated with the respective optical branches; and
- operating an optical technology multiplexer/demultiplexer (210, 230, 430) comprising a plurality of sections associated with the respective plurality of optical branches, wherein each of the sections of the optical technology multiplexer/demultiplexer (210, 230, 430) is configured to convert between respective optical signals of the respective sets of wavelength bands associated with the respective sections of the optical splitter/combiner and a respective combined optical signal for the respective optical branch.
